# EUROPÄISCHE PATENTSCHRIFT

(11) **EP 1 426 646 B1**
(45) Veröffentlichungstag und Bekanntmachung des Hinweises auf die Patenterteilung: **08.06.2005**
(21) Anmeldenummer: 03027743.8
(22) Anmeldetag: 02.12.2003
(51) Int. Cl.: F16D 65/34

(54) **Bremsaktuator**
Brake aktuator
Actionneur de frein

(30) Priorität: 04.12.2002 DE 10256839
(43) Veröffentlichungstag der Anmeldung: 09.06.2004
(73) Patentinhaber: Bosch Rexroth AG, 70184 Stuttgart (DE)
(72) Erfinder: Hutzelmann, Werner, 97782 Gräfendorf (DE); Laube, Martin, 97816 Lohr (DE)
(74) Vertreter: Winter, Brandl,&Fürniss, Hübner Röss, Kaiser, Polte Partnerschaft Patent- und Rechtsanwaltskanzlei

(56) Entgegenhaltungen:
- DE-A- 19 511 287
- DE-A- 19 543 098
- US-B1- 6 315 086

## Beschreibung

Die Erfindung betrifft einen Bremsaktuator gemäss dem Oberbegriff des Patentanspruchs 1.

Derartige Bremsaktuatoren werden beispielsweise zur Betätigung von Scheibenbremsen verwendet. In der EP 0 728 089 B1 ist ein Bremsaktuator offenbart, bei dem in einem Gehäuse eine Spindelanordnung mit einer ausfahrbaren Spindelstange gelagert ist. Durch Ausfahren dieser Spindelstange wird eine Bremse aktiviert. Der Antrieb der Spindelanordnung erfolgt mittels eines Elektromotors, über den eine Spindelmutter angetrieben wird. Die Rotationsbewegung der Spindelmutter wird über einen Rollgewindetrieb in eine translatorische Bewegung der mit einem Aussengewinde versehenen Spindelstange übertragen. Die zwischen Spindelmutter und Spindelstange angeordneten Gewinderollen können dabei an der Spindelmutter gelagert sein, so dass keine Relativverschiebung zwischen Spindelmutter und Gewinderollen erfolgt. Alternativ können sich diese Gewinderollen auch relativ zur Spindelmutter und zur Spindelstange bewegen.

In der DE 198 18 157 A1 ist ein Bremsaktuator offenbart, bei dem die Bewegung der angetriebenen Spindelmutter ebenfalls über einen Rollgewindetrieb auf die Spindelstange übertragen wird. Bei dieser Lösung sind die Gewinderollen drehbar an der nicht verschiebbaren Spindelmutter gelagert.

Aus der DE 195 43 098 A1 ein Bremsaktuator mit Rollgewindetrieb bekannt, bei dem die Spindel angetrieben wird und die Spindelmutter mitsamt den Gewinderollen in Axialrichtung zur Bremsbetätigung oder zum Lüften der Bremse verschoben wird.

Bei denjenigen Lösungen, bei denen die Bremsbetätigung durch Axialverschiebung der Spindelstange eingeleitet wird (EP 0 728 089 B1, DE 198 18 157 A1) ist die Spindelstange praktisch über ihre gesamte Axiallänge mit einem Aussengewinde ausgeführt. Durch dieses Aussengewinde wird zum einen die Biegesteifigkeit der Spindelstange verringert, zum anderen ist ein erheblicher vorrichtungstechnischer Aufwand zur Fertigung von Spindelstangen erforderlich.

Dem gegenüber liegt der Erfindung die Aufgabe zugrunde, einen Bremsaktuator zu schaffen, bei dem die vorbeschriebenen Nachteile beseitigt sind.

Diese Aufgabe wird durch einen Bremsaktuator mit den Merkmalen des Patentanspruchs 1 gelöst.

Erfindungsgemäss wird der Bremsaktuator mit einem invertierten Rollgewindetrieb ausgeführt, bei dem die Wälzkörper des Rollgewindetriebs mit der Spindelstange mitlaufen und das Gewinde der Spindelmutter um den Hub zur Bremsbetätigung länger als die Wirklänge der Wälzkörper ausgeführt ist. D. h., an der Spindelstange muss nur ein vergleichsweise kurzer, mit dem Wälzkörper zusammenwirkender Gewinde- oder Verzahnungsabschnitt vorgesehen werden, so dass der verbleibende Teil der Spindelstange zylinderförmig ausgeführt werden kann und somit die Herstellung der Gewindestange und auch deren mögliche Führung innerhalb der Spindelmutter vereinfacht ist.

Bei einem besonders bevorzugten Ausführungsbeispiel ist die Spindelstange innerhalb der hohlwellenartig ausgeführten Spindelmutter über Radiallager, beispielsweise Gleitlager abgestützt.

Bei einem besonders bevorzugten Ausführungsbeispiel erfolgt diese Radialabstützung über zwei axial beabstandete Lager, vorzugsweise Gleitlager. Durch die zweifache Führung der Spindelstange werden aus der Einleitung äusserer Kräfte resultierende Radial- und Biegebelastungen aufgenommen, so dass diese vom eigentlichen Rollgewindetrieb ferngehalten werden.

Die Montage der beiden axial beabstandeten Gleitlager ist besonders einfach wenn diese an einer gemeinsamen Lagerbuchse ausgebildet sind, die drehfest in die Spindelmutter eingesetzt ist.

Eine Besonderheit dieser Gleitlagerung besteht darin, dass sich die zylinderische Spindelstange translatorisch bewegt, während die Spindelmutter mit den darin eingesetzten Gleitlagern rotiert, so dass praktisch eine schraubende Relativbewegung zwischen Spindelstange und Gleitführung vorliegt.

Der Aufbau des Bremsaktuators ist besonders kompakt, wenn der Antrieb der Spindelmutter über ein Großrad erfolgt, das direkt an der Spindelmutter befestigt ist. Dieses Großrad kämmt dann mit einem Ritzel des Elektromotors. Die über den Elektromotor eingeleiteten Antriebsmomente werden besonders gut abgestützt, wenn das Großrad im Bereich der Gleitlagerungen auf die Spindelmutter aufgesetzt ist.

Die Herstellung der Spindelstange wird erleichtert, wenn diese im Bereich des Rollgewindetriebs radial zurückgestuft ist und auf diesen zurückgestuften Endabschnitt eine Hülse mit der mit den Wälzkörpern kämmenden Aussenverzahnung aufgesetzt ist. Auf diesem Endabschnitt werden dann auch die Lagerringe zur Lagerung der Wälzkörper gefestigt. Diese Aussenverzahnung ist üblicherweise durch ein Gewinde gebildet, es ist auch möglich, die Verzahnung durch Ringnuten-/vorsprünge auszubilden (siehe DE 195 43 098 A1).

Bei einer vorteilhaften Weiterbildung der Erfindung ist das Gehäuse des Bremsaktuators mehrteilig ausgeführt, wobei zwischen einem eine Anlenkung an ein Bremsgestänge tragenden Gehäuseendstück und einem den Rollgewindetrieb aufnehmenden Teilgehäuse eine Federanordnung vorgesehen ist, die somit direkt im Kraftwirkungspfad des Aktuators liegt. Durch diese Federanordnung wird dem Aktuator eine definierte Elastizität gegeben, durch die von aussen kommende Stöße gedämpft werden, so dass diese nicht direkt auf den Rollgewindetrieb wirken können. Des Weiteren wird durch diese Elastizität eine feinfühlige Kraftregelung des Bremseingriffs ermöglicht.

Diese Kraftregelung erfolgt bei einem vorteilhaften Ausführungsbeispiel über eine Kraftmesseinrichtung, über die die vom Bremsaktuator generierten Kräfte aufgenommen und die entsprechenden Signale an die Bremskraftregelung des Fahrzeugs weiter gemeldet werden.

Sonstige vorteilhafte Weiterbildungen der Erfindung sind Gegenstand weiterer Unteransprüche.

Im folgenden wird ein bevorzugtes Ausführungsbeispiel der Erfindung anhand schematischer Zeichnungen näher erläutert. Wir zeigen:
Figur 1 dreidimensionale Darstellungen eines erfindungsgemässen Bremsaktuators;
Figur 2 einen Längsschnitt durch den Bremsaktuator aus Figur 1;
Figur 3 ein Schnitt entlang der Linie C-C in Figur 1 und
Figur 4 ein Schnitt entlang der Linie B-B in Figur 1.

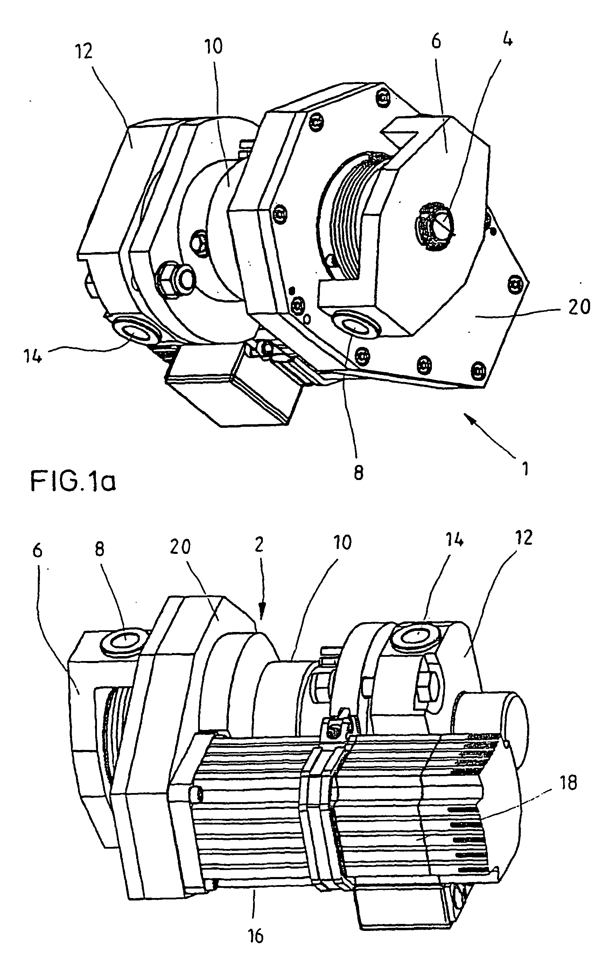

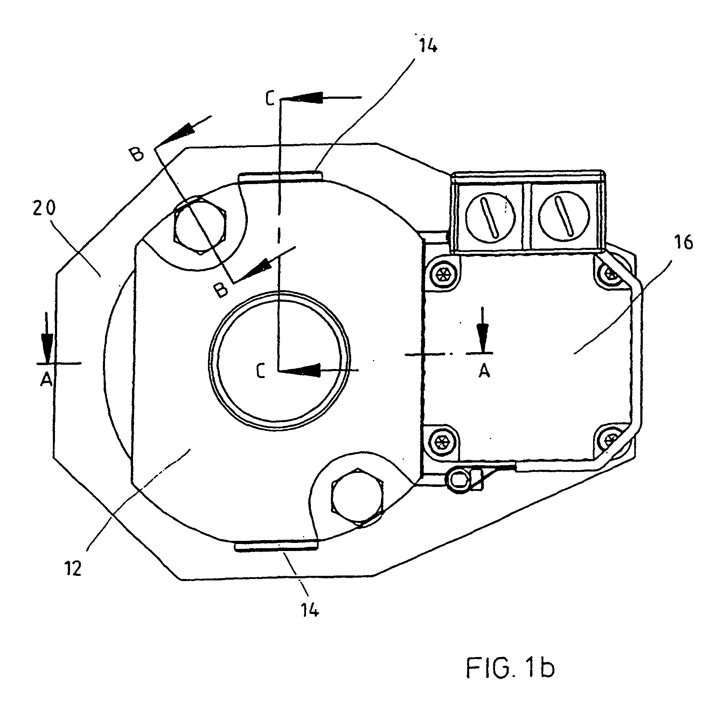

Figur 1 zeigt drei Ansichten eines erfindungsgemässen elektromechanischen Bremsaktuators 1. Dieser hat ein Gehäuse 2, in dem eine Spindelstange 4 axialverschiebbar geführt ist. Die Spindelstange 4 trägt an einem aus dem Gehäuse 2 vorstehenden Endabschnitt eine U-förmige Anlenkplatte 6, an deren parallel verlaufenden Seitenschenkeln zwei Anlenkabschnitte 8 zur Anlenkung eines Bremsgestänges angeordnet ist.

Das Gehäuse 2 ist mehrteilig mit einem Teilgehäuse 10 und einem Gehäuseendstück 12 ausgebildet, an dem zwei weitere Anlenkabschnitte 14 ausgebildet sind, an denen der gehäuseseitige Teil des Bremsgestänges befestigt wird. Der Antrieb des Bremsaktuators 1 erfolgt mittels eines Elektromotors 16, der mit einer elektrisch zu öffnenden Federdruckbremse 18 ausgeführt ist. Über diese Federdruckbremse 18 kann der Elektromotor 16 in einer vorbestimmten Bremsposition festgelegt werden, so dass er auch bei Stromlosschalten in dieser Bremsposition verbleibt.

Der Elektromotor 18 ist an einen Getriebekasten 20 angeflanscht und über ein Getriebe mit einem Spindeltrieb verbunden, über den die Spindelstange 4 axial verschiebbar ist. Beim im Folgenden näher beschriebenen Ausführungsbeispiel ist der Spindeltrieb als Rollgewindetrieb ausgeführt. Wie Figur 1 entnehmbar, verläuft die Achse des Elektromotors 16 achsparallel zur Achse des Spindeltriebs.

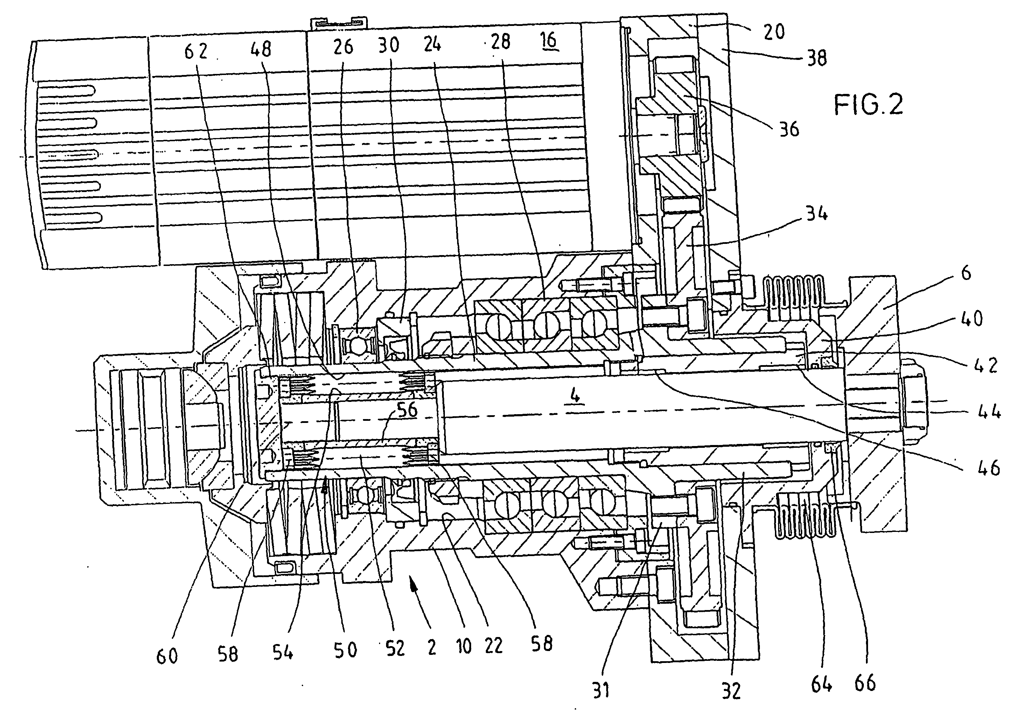

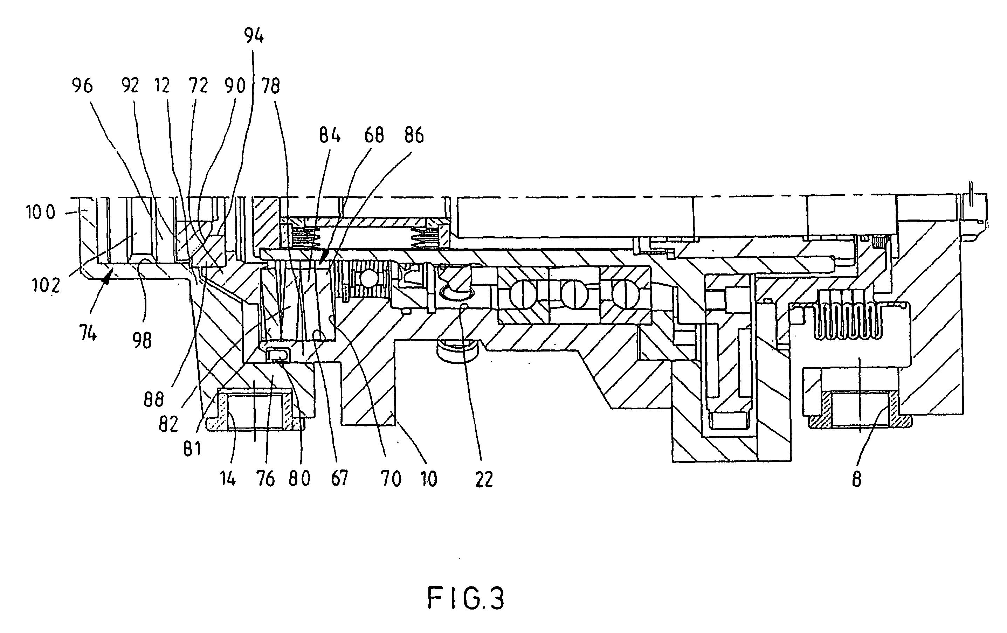

Gemäß den Schnittdartellungen in den Figuren 2 und 3 umgreift das Teilgehäuse 10 eine sich stufenförmig zu ihren beiden stirnseitigen Endabschnitten hin erweiternde Aufnahmebohrung 22, in der eine Spindelmutter 24 über eine Lageranordnung mit einem Radiallager 26 sowie drei Schrägkugellagern 28 gelagert ist. Zwischen den Kugellagern 26, 28 ist eine Dichtungsanordnung 30 vorgesehen.

Die axiale Festlegung von Innen- und Aussenringen der Kugellager 26, 28 erfolgt in herkömmlicher Weise durch geeignet ausgebildete Schultern des Teilgehäuses 10 bzw. der Spindelmutter 24 und durch Spannringe oder Sprengringe, auf deren explizite Beschreibung verzichtet werden kann.

Die Lageranordnung ist derart ausgeführt, dass die Spindelmutter 24 mit Bezug zum Teilgehäuse 10 axial nicht verschiebbar ist.

Die Spindelmutter 24 hat an ihrem in Figur 2 rechten Endabschnitt einen radial vorspringenden Befestigungsflansch 31, an den sich ein zylinderförmiger Endabschnitt 32 der Spindelmutter 24 anschliesst. Auf diesen ist ein Großrad 34 aufgesetzt, das mit dem Befestigungsflansch 31 verschraubt ist. Das Großrad 34 und der Befestigungsflansch 31 sind in dem Getriebekasten 20 angeordnet, der stirnseitig auf das Teilgehäuse 10 aufgesetzt ist. Im Achsabstand zur Spindelmutter 24 ist am Getriebekasten 20 der Elektromotor 16 angeflanscht, dessen Ritzel 36 mit dem Großrad 34 kämmt.

Den stirnseitigen Abschluss des Gehäuses 2 bildet ein Deckel 38 des Getriebekastens 20, auf den eine den Endabschnitt 32 der Spindelmutter 24 umgreifender nabenförmige Abdeckung 40 aufgesetzt ist.

In den Endabschnitt 32 der Spindelmutter 24 ist eine Lagerhülse 42 eingesetzt, an der zwei axial beabstandete Gleitlager 44, 46 vorgesehen sind, über die die Spindelstange 4 in Radialrichtung geführt ist. Der Abstand der beiden Gleitlager 44, 46 ist zur besseren Abstützung der Spindelstange 4 möglichst groß gewählt und überstreckt denjenigen Bereich, in dem das Großrad 34 an der Spindelstange 4 befestigt ist.

Erfindungsgemäss ist das Spiel im Bereich der Gleitführungen 44, 46 geringer als das Spiel im Bereich des Rollgewindetriebs 50, so dass die auftretenden Kräfte sicher aufgenommen werden können. Durch die zweifache Gleitführung (Führungen 44, 46) werden Radial- und Biegebelastungen aus äusseren Kräften (beispielsweise verursacht durch Eigengewicht, durch Schock-/Vibrationsbelastung) in diesem Bereich aufgenommen und von dem Rollgewindetrieb ferngehalten.

Wie bereits eingangs erwähnt, sind die Spindelmutter 24 und die Spindelstange 4 mittels eines Rollgewindetriebs 50 miteinander verbunden. Dieser ist an dem von der Lagerhülse 42 entfernten Endabschnitt der Spindelmutter 24 ausgebildet. Hierzu ist an dem in Figur 2 linken Endabschnitt der Spindelmutter 24 ein Innengewinde 48 vorgesehen, das mit mehreren, jeweils mit einem Aussengwinde versehenen Wälzkörpern 52 kämmt. Diese stehen mit ihrem Aussenumfang in Eingriff mit einem Aussengewinde 54 einer Gewindehülse 56, die drehfest mit der Spindelstange 4 verbunden ist. Seitlich der Gewindehülse 56 sind des Weiteren noch Lagerringe 58 vorgesehen, in denen die Wälzkörper 52 drehbar gelagert sind.

Die Lagerringe 58 und die dazwischen liegende Gewindehülse 56 sind auf einen radial zurückgesetzten Zapfen 60 der Spindelstange 4 aufgesetzt. Die Axiallänge des Innengewindes 48 der Spindelmutter 24 entspricht dabei zumindest der Axiallänge des Zapfens 60 (oder genauer gesagt: der der Länge Wälzkörper 52 + dem gewünchten Hub der Spindelstange 4. Im Unterschied zu herkömmlichen Lösungen ist somit bei dem erfindungsgemässen Bremsaktuator ein "invertierter" Rollgewindetrieb 50 realisiert, bei dem das kürzere Gewinde praktisch an der Spindelstange 4 und das längere Gewinde an der Spindelmutter 24 ausgebildet ist, während bei herkömmlichen Lösungen die Spindelmutter mit dem kürzeren und die Spindelstange mit dem längeren Gewinde ausgeführt ist.

Auf das in Figur 2 linke Ende der Spindelmutter 24 ist ein Deckel 62 aufgesetzt, die den stirnseitigen Abschluss der Spindelstange 4 bildet.

Der vom Deckel 62 entfernte Endabschnitt der Spindelstange 4 durchsetzt die Abdeckung 40. Auf den aus dem Gehäuse 2 hervorstehenden Endabschnitt ist die eingangs beschriebene Anlenkplatte 6 mit den beiden Anlenkabschnitten 8 (siehe Figur 3) aufgesetzt. An der Abdeckung 40 und an der Anlenkplatte 6 ist eine Manschette 64 befestigt, über die in Zusammenwirken mit Dichtungen 66 das Eindringen von Schmutz in die Spindelanordnung verhinderbar ist.

Wie aus den Figuren 2 und 3 hervorgeht, ist der linke Endabschnitt der Aufnahmebohrung 22 zu einem Aufnahmeraum 67 erweitert. In diesem ist ein Tellerfederpaket 68 aufgenommen, das an einer Ringschulter 70 des Aufnahmeraums 67 abgestützt ist. Dieses Tellerfederpaket 68 ist über einen Federteller 72 und über eine im folgenden noch näher beschriebene Kraftmesseinrichtung 74 am Gehäuseendstück 12 abgestützt. Dieses hat einen axial in Richtung zum Teilgehäuse 10 vorspringenden ringförmigen Führungsabschnitt 76, der einen Führungsvorsprung 78 des Teilgehäuses 10 umgreift. Zur Abdichtung ist zwischen dem Führungsabschnitt 76 und dem Führungsvorsprung 78 eine elastische Dichtlippe 80 vorgesehen.

Bei dem dargestellten Ausführungsbeispiel besteht das Tellerfederpaket 68 aus vier Tellerfedern, von denen hinsichtlich ihrer Wirkung zwei (81, 82) in Reihe geschaltet und zwei (84, 86) parallel geschaltet sind, so dass sich eine progressive Federkennlinie einstellt. Der Federteller 72 greift in der in Figur 3 links liegenden, in Reihe geschalteten Tellerfeder 81 an. An der von dieser Tellerfeder 81 entfernten Rückseite des Federtellers 72 ist ein Axialgelenklager, mit einem Stützring 88 mit einer konkav gekrümmten Lageraufnahme 90 und einem auf dieser Lageraufnahme 90 aufgestützten konvex gekrümmten Gelenkkörper 92 abgestützt. Der Gelenkkörper 92 ist ebenfalls ringförmig ausgebildet, wobei in eine Innenbohrung 94 ein Axialvorsprung eines Kolbens 96 eintaucht. Dieser ist axial verschiebbar in einem Kolbenraum 98 geführt, der in einem Meßvorsprung 100 des Teilgehäuses 12 vorgesehen ist. Der Kolben 96 stützt sich auf einem Meßaufnehmer, beispielsweise einem Piezomeßaufnehmer 102 ab, der in Abhängigkeit von der über den Kolben auf ihn einwirkenden Kraft ein Signal an eine Regelungseinheit abgibt, über die der Elektromotor 16 angesteuert wird.

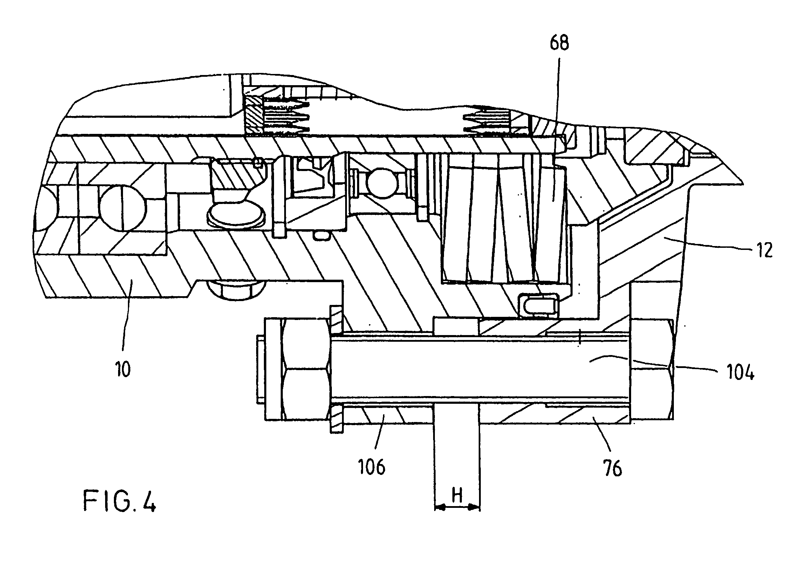

Die Vorspannung des Tellerfederpaketes 68 erfolgt gemäss den Figuren 4 und 1 mittels zweier diametral zueinander angeordneten Spannschrauben 104, die einen Spannflansch 106 des Teilgehäuses 10 und den ringförmigen Führungsabschnitt 76 des Gehäuseendstücks 12 parallel zur Tellerfederachse durchsetzen.

Der bei vorgespanntem Tellerfederpaket 68 verbleibende Hub H ist so gewählt, dass bei voll betätigter Bremse dieser Resthub H so groß ist, dass durch Anziehen der beiden Spannschrauben 104 die Spannung aus dem Bremsgestänge genommen und somit die Bremse gelöst werden kann. D. h., die beiden Spannschrauben 104 können zum Notlösen des Bremseingriffs verwendet werden.

Durch das Axialgelenklager mit dem Stützring 88 und dem Gelenkkörper 92 wird eine zentrische und momentenfreie Beaufschlagung des Kolbens 96 und damit des Meßaufnehmers 102 gewährleistet, da dieser Kolben 96 von dem auf das Tellerfederpaket 68 wirkenden Federteller 72 abgekoppelt ist. Durch das Axialgelenklager (88, 92) und das Tellerfederpaket 68 entsteht ein zusätzlicher Freiheitsgrad zwischen den Anlenkpunkten an die Bremszange. Über diesen zusätzlichen Freiheitsgrad lassen sich Verformungen innerhalb der Bremszange ausgleichen, ohne dass der Bremsaktuator 1 mit Biegemomenten belastet wird.

Die Figuren zeigen den Bremsaktuator 1 im unbetätigten Zustand, d. h., die Spindelstange 4 ist eingefahren, das Tellerfederpaket 68 mit seiner vorbestimmten Vorspannung beaufschlagt. Zum Betätigen der Bremse wird der Elektromotor 16 angesteuert und entsprechend die Spindelmutter 24 über das Ritzel 36 und das Großrad 34 gedreht. Diese Drehung der Spindelmutter 24 wird über den invertierten Rollgewindetrieb in eine Axialverschiebung der Spindelstange 4 umgesetzt - diese fährt aus und das über die Anlenkabschnitte 8, 14 an die Spindelstange 24 und das Teilgehäuse 10 angelenkte Bremsgestänge (nicht dargestellt) betätigt - die Bremse wird aktiviert. Beim Aufbringen der Bremskraft wird das im Kraftwirkungspfad des Bremsaktuators 1 liegende Tellerfederpaket mit einer über der Vorspannung liegenden Kraft beaufschlagt und führt entsprechend einen Hub aus. D. h., Änderungen in der Bremskraft resultieren auch in Änderungen des Hubes des Tellerfederpaketes, so dass durch diese definierte Elastizität eine feinfühlige Kraftregelung in Abhängigkeit von dem vom Meßaufnehmer 103 dedektierten Signal ermöglicht wird. Durch das Tellerfederpaket können des Weiteren von aussen kommende Stöße, die beispielsweise durch eine Welligkeit oder einen Seitenschlag der Bremsscheibe resultieren gedämpft werden, so dass der Bremsaktuator 1 nicht beschädigt wird.

Da die beiden Gleitlager 44, 46 mit der Spindelmutter 24 rotieren und die Spindelstange 4 nur translatorisch bewegt wird, liegt praktisch eine schraubende Relativbewegung zwischen diesen beiden Bauelementen vor.

Bei aktivierter Bremse kann der erfindungsgemäße Bremsaktuator 1 auch als Parkbremse wirken. Dazu wird nach Aufbringen der aktiven Bremskraft der Elektromotor 16 mittels der Federdruckbremse 18 oder einer anderen geeigneten Bremse passiv festgebremst und anschliessend der Aktuator abgeschaltet. Durch die Elastizität der vorgespannten Tellerfedern wird diese Bremskraft auch bei den üblicher Weise auftretenden Maßänderungen, verursacht beispielsweise durch das Abkühlen des Aktuators oder der Bremsscheibe ausgeglichen.

Zum Lüften der Bremse wird ggf. die Federdruckbremse 18 elektrisch gelöst und der Elektromotor 16 mit umgekehrter Drehrichtung angesteuert, so dass die Spindelstange 4 über den Rollgewindetrieb 50 in die in Figur 2 dargestellte Grundstellung eingefahren wird - die Spannung wird aus dem Bremsgestänge herausgenommen und die Bremse gelüftet.

Anstelle des vorbeschriebenen Rollgewindetriebs 50 kann prinzipiell auch ein anderes Getriebe zur Umsetzung einer Rotationsbewegung einer Mutter in eine Translationsbewegung einer Spindelstange 4 verwendet werden.

Bei dem vorbeschriebenen Ausführungsbeispiel ist ein Rollgewindetrieb zur Übersetzung der Rotationsbewegung der Spindelmutter 24 in eine Translationsbewegung der Spindelstange 4 verwendet. Die Anmelderin behält sich vor, auf eine Ausführung mit Radialabstützung der Spindelstange 4 innerhalb der Spindelmutter 24 - unabhängig von dem verwendeten Trieb - einen eigenen unabhängigen Anspruch zu richten.

Offenbart ist ein Bremsaktuator, mit einem Gehäuse, in dem eine Spindelanordnung aufgenommen ist. Die Drehbewegung der Spindelmutter wird mittels eines Rollgewindetriebs in eine translatorische Bewegung der Spindelstange umgesetzt. Erfindungsgemäss werden die Wälzkörper in Axialrichtung mit der Spindelstange verschoben, während an der Spindelmutter ein mit den Wälzkörpern kämmendes Gewinde ausgebildet ist, dessen Länge der Eingriffslänge der Wälzkörper + dem Hub der Spindelstange zur Bewirkung des Bremseingriffs entspricht.

### Bezugszeichenliste

- 1: Bremsaktuator
- 2: Gehäuse
- 4: Spindelstange
- 6: Anlenkplatte
- 8: Anlenkabschnitt
- 10: Teilgehäuse
- 12: Gehäuseendstück
- 14: Anlenkabschnitt
- 16: Elektromotor
- 18: Federdruckbremse
- 20: Getriebekasten
- 22: Aufnahmebohrung
- 24: Spindelmutter
- 26: Rillenkugellager
- 28: Schrägkugellager
- 30: Dichtungsanordnung
- 31: Befestigungsflansch
- 32: Endabschnitt
- 34: Großrad
- 36: Ritzel
- 38: Deckel
- 40: Abdeckung
- 42: Lagerbuchse
- 44: Gleitlager
- 46: Gleitlager
- 48: Innengewinde
- 50: Rollgewindetrieb
- 52: Wälzkörper
- 54: Aussengewinde
- 56: Gewindehülse
- 58: Lagerring
- 60: Zapfen
- 62: Deckel
- 64: Manschette
- 66: Dichtungen
- 67: Aufnahmeraum
- 68: Tellerfederpaket
- 70: Ringschulter
- 72: Federteller
- 74: Kraftmesseinrichtung
- 76: Führungsabschnitt
- 78: Führungsvorsprung
- 80: elastische Dichtlippe
- 81: Tellerfeder
- 82: Tellerfeder
- 84: Tellerfeder
- 86: Tellerfeder
- 88: Stützring
- 90: Lageraufnahme
- 92: Gelenkkörper
- 94: Innenbohrung
- 96: Kolben
- 98: Kolbenraum
- 100: Messvorsprung
- 102: Piezo-Meßaufnehmer
- 104: Spannschrauben
- 106: Spannflansch

## Patentansprüche

1. Bremsaktuator mit einem Gehäuse (2), in dem ein von einem elektrischen Antriebsmotor (16) angetriebener Rollgewindetrieb (50) mit einer Spindelmutter (24) gelagert ist, deren Drehbewegung über Wälzkörper (52) in eine translatorische Bewegung einer Spindelstange (4) umgesetzt ist, deren aus dem Gehäuse herausragender Endabschnitt an einem Bremsbetätigungselement angreift, **dadurch gekennzeichnet, dass** die Wälzkörper (52) in Axialrichtung an der Spindelstange (4) festgelegt sind, und dass das Eingriffsgewinde der Spindelmutter (24) um den Hub (H) länger ist als die Eingriffslänge der Wälzkörper (52).

2. Bremsaktuator nach Patentanspruch 1, wobei die Spindelstange (4) im Axialabstand zum Eingriffsabschnitt mit der Spindelmutter (24) in dieser radial gelagert ist.

3. Bremsaktuator nach Patentanspruch 2, wobei die radiale Lagerung mittels zweier axial beabstandeter Gleitlager (44, 46) erfolgt.

4. Bremsaktuator nach Patentanspruch 3, wobei die Gleitlager (44, 46) an einer in die Spindelmutter (24) eingesetzten Lagerbuchse (42) ausgebildet sind.

5. Bremsaktuator nach einem der Patentansprüche 2 bis 4, wobei das Lagerspiel innerhalb des Gleitlagers geringer ist als das Spiel im Rollgewindetrieb (50).

6. Bremsaktuator nach einem der vorhergehenden Patentansprüche, wobei ein Großrad (34) zum Antrieb der Spindelmutter (24) auf diese aufgesetzt ist.

7. Bremsaktuator nach Patentanspruch 6, wobei das Großrad (34) im Bereich der radialen Lagerung (44, 46) auf die Spindelmutter (24) aufgesetzt ist.

8. Bremsaktuator nach einem der vorhergehenden Patentansprüche, wobei die Spindelstange (4) einen radial zurückgesetzten Endabschnitt (60) hat, auf den eine Hülse (56) mit der mit den Wälzkörpern (52) kämmenden Aussenverzahnung aufgesetzt ist.

9. Bremsaktuator nach Patentanspruch 8, wobei Lagerringe (58) zur Lagerung der Wälzkörper 52 auf dem radial zurückgesetzten Endabschnitt (60) der Spindelstange (4) gelagert sind.

10. Bremsaktuator nach einem der vorhergehenden Patentansprüche, wobei das Gehäuse mehrteilig mit einem Gehäuseendstück (12) und einem Teilgehäuse (10) ausgeführt ist, zwischen denen eine Federanordnung (68) angeordnet ist.

11. Bremsaktuator nach einem der vorhergehenden Patentansprüche, wobei im Gehäuseendstück (12) eine Kraftmesseinrichtung (74) aufgenommen ist.

## Claims

1. Brake actuator having a housing (2), in which a roll screw drive (50) which is driven by an electric drive motor (16) is supported by means of a spindle nut (24), the rotation movement of which is converted, by means of roller members (52), into a translation movement of a spindle rod (4), whose end portion that protrudes from the housing engages on a brake actuation element, **characterised in that** the roller members (52) are fixed in an axial direction on the spindle rod (4), and **in that** the engagement thread of the spindle nut (24) is longer than the engagement length of the roller members (52) by the travel movement (H).

2. Brake actuator according to patent claim 1, the spindle rod (4) being radially supported in the spindle nut (24) with axial spacing from the engagement portion with the spindle nut (24).

3. Brake actuator according to patent claim 2, the radial support being provided by means of two axially spaced sliding bearings (44, 46).

4. Brake actuator according to patent claim 3, the sliding bearings (44, 46) being formed on a bearing sleeve (42) which is inserted in the spindle nut (24).

5. Brake actuator according to any one of patent claims 2 to 4, the bearing play in the sliding bearing being less than the play in the roll screw drive (50).

6. Brake actuator according to any one of the preceding patent claims, a wheel (34) being positioned on the spindle nut (24) in order to drive the spindle nut (24).

7. Brake actuator according to patent claim 6, the wheel (34) being positioned on the spindle nut (24) in the region of the radial bearing (44, 46).

8. Brake actuator according to any one of the preceding patent claims, the spindle rod (4) having a radially set-back end portion (60), on which a sleeve (56) is positioned having the outer tooth arrangement which meshes with the roller members (52).

9. Brake actuator according to patent claim 8, bearing rings (58) for supporting the roller members (52) being arranged on the radially set-back end portion (60) of the spindle rod (4).

10. Brake actuator according to any one of the preceding patent claims, the housing being constructed in several parts so as to have a housing end-piece (12) and a part housing (10), between which a spring arrangement (68) is arranged.

11. Brake actuator according to any one of the preceding patent claims, a force measuring device (74) being received in the housing end-piece (12).

## Revendications

1. Actionneur de frein avec un carter (2) dans lequel un rouleau de commande à tige filetée (50) entraîné par un moteur d'entraînement (16) électrique est logé avec un écrou de broche (24), dont le mouvement de rotation est converti, par des corps de roulement (52), en un mouvement de translation d'une tige de broche (4), dont la portion terminale faisant saillie hors du boîtier est en prise avec un élément d'actionnement du frein, **caractérisé en ce que** les corps de roulement (52) sont fixés dans la direction axiale sur la tige de broche (4) et que le filet de prise de l'écrou de broche (24) est plus long, de la longueur de la course (H), que la longueur de prise des corps de roulement (52).

2. Actionneur de frein selon la revendication 1, dans lequel la tige de broche (4) est logée, dans la distance axiale par rapport au segment de prise avec l'écrou de broche (24), radialement dans cet écrou.

3. Actionneur de frein selon la revendication 2, dans lequel le logement radial s'effectue au moyen de deux paliers lisses (44, 46) espacés axialement.

4. Actionneur de frein selon la revendication 3, dans lequel les paliers lisses (44, 46) sont disposés contre un coussinet (42) introduit dans l'écrou de broche (24).

5. Actionneur de frein selon l'une quelconque des revendications 2 à 4, dans lequel le jeu du palier à l'intérieur du palier lisse est inférieur au jeu à l'intérieur du rouleau de commande à tige filetée (50).

6. Actionneur de frein selon l'une quelconque des revendications précédentes, dans lequel une roue de grand diamètre (34) est disposée sur l'écrou de broche (24) pour l'entraînement de celui-ci.

7. Actionneur de frein selon la revendication 6, dans lequel la roue de grand diamètre (34) est disposée, dans la zone du logement radial (44, 46), sur l'écrou de broche (24).

8. Actionneur de frein selon l'une quelconque des revendications précédentes, dans lequel la tige de broche (4) présente une portion terminale (60) rétractée radialement, sur lequel un manchon (56) avec l'engrenage en prise avec les corps de roulement (52) est posé.

9. Actionneur de frein selon la revendication 8, dans lequel des bagues d'appui (58) pour le logement des corps de roulement (52) sont logées sur la portion terminale (60) rétractée radialement de la tige de broche (4).

10. Actionneur de frein selon l'une quelconque des revendications précédentes, dans lequel le boîtier est réalisé en plusieurs parties avec une pièce terminale de carter (12) et une portion de carter (10), entre lesquelles un agencement de ressorts (68) est disposé.

11. Actionneur de frein selon l'une quelconque des revendications précédentes, dans lequel un dispositif de mesure de la force (74) est logé dans la pièce terminale de carter (12).
